# EUROPÄISCHE PATENTSCHRIFT

(11) **EP 1 816 845 B1**
(45) Veröffentlichungstag und Bekanntmachung des Hinweises auf die Patenterteilung: **04.03.2020**
(21) Anmeldenummer: 06101335.5
(22) Anmeldetag: 06.02.2006
(51) Int. Cl.: H04M 15/00, G08C 17/02, G01S 5/00, H04W 4/02, H04W 4/24

(54) **Verfahren und System zur ortsabhängigen Vergebührung von Dienstleistungen**
Method and system for location dependent charging of services
Procédé et système pour la tarification de prestations en fonction de la localisation

(43) Veröffentlichungstag der Anmeldung: 08.08.2007
(73) Patentinhaber: Swisscom AG, 3050 Bern (CH)
(72) Erfinder: Aebi, Paul, 3303, Münchringen (CH)
(74) Vertreter: BOVARD AG

(56) Entgegenhaltungen:
- WO-A-98/58509
- WO-A-2004/054304
- DE-A1- 19 819 582
- US-A1- 2003 054 836

## Beschreibung

### Technisches Gebiet

Die vorliegende Erfindung bezieht sich auf ein Verfahren und ein System zur lokationsabhängigen Vergebührung von Dienstleistungen. Die Erfindung bezieht sich insbesondere auf die lokationsabhängige Vergebührung einer Dienstleistung, welche von einem Benutzer mit einem mobilen Terminal, welches ein Identifikationsmodul umfasst, beansprucht wird.

### Stand der Technik

Für die Vergebührung von Anrufen, d.h. für die Belastung eines Geldbetrags für einen getätigten Anruf eines Kunden, gibt es im Stand der Technik viele unterschiedliche Verfahren. Anrufe können beispielsweise entsprechend einer Zeitdauer und einer Zielnummer vergebührt werden. So können Anrufe ins Ausland während Geschäftszeiten zu einem viel höheren Preis vergebührt werden als beispielsweise Anrufe innerhalb eines Stadtnetzes ausserhalb von Geschäftszeiten. Solche Modelle der Vergebührung können durch das Konzept von Angebot und Nachfrage von Dienstleistungen abgestützt sein. Die Vergebührung von Anrufen kann auch auf einem flat-rate Tarif beruhen, sodass ein Anruf immer zu demselben Preis vergebührt wird. Ein flat-rate Tarif kann beispielsweise Ersparnisse beim Betrieb von den für die Vergebührung notwendigen technischen Einrichtungen bringen. Es ist im Stand der Technik auch bekannt, für mobile Telefone eine standortabhängige Vergebührung von Anrufen durchzuführen, insbesondere bei einem Wechsel des Standorts zwischen unterschiedlichen Netzbetreiber (Roaming). Netzbetreiber von Mobilfunknetzen würden jedoch gerne auch Tarifstrukturen anwenden, mit welchen beispielsweise die Festnetztelefonie direkt konkurrenziert werden kann. Der Netzbetreiber eines Mobilfunknetzes würde dazu entsprechend dem aktuellen Standort des mobilen Telefons einen entsprechenden Tarif für die Vergebührung verwenden. Der aktuelle Standort kann sich dabei auf den Wohnort des Benutzers, auf ein Reisemittel des Benutzers wie einen Zug oder auf einen Standort in einem Bürogebäude beziehen. Für den Standort am Wohnort des Benutzers würde der Netzbetreiber des Mobilfunknetzes eine Tarifstruktur verwenden, welche die Tarifstruktur des Netzbetreibers eines Festnetztelefonienetzwerks für private Telefonieanschlüsse konkurrenziert. Dementsprechend würde der Netzbetreiber des Mobilfunknetzes für einen mobilen Standort, wie beispielsweise im Zug oder auf der Strasse, oder für einen Standort in einem Bürogebäude einen Tarif für die Vergebührung von Anrufen anwenden, mit welchem der jeweilige Netzbetreiber an diesen Standorten direkt konkurrenziert würde.

In der Internationalen Anmeldung WO 99/05875 (Siemens AG) wird ein Verfahren zur Vergebührung von Anrufen beschrieben. Durch eine Zusammenfassung von Funkzellen und/oder von Aufenthaltsgebieten werden für einen Teilnehmer Zonen definiert. Solche Zonen können sich auf eine Home Zone, eine City Zone oder eine Office Zone beziehen. Einer Zone wird ein Zonentarif zugeordnet und eine Vergebührungseinrichtung wird über die für den Teilnehmer definierten Zonen informiert, die bei Aufenthalt des Teilnehmers in einer der Zonen zum Ermitteln der Anrufgebühr verwendet werden.

In der Europäischen Patentanmeldung EP 0 939 570 (Siemens AG) wird ein Verfahren zur lokationsabhängigen Vergebührung von Verbindungen zwischen mobilen Teilnehmern beschrieben. Bei einer Verbindung eines mobilen Teilnehmers wird eine Lokationsinformation der mit dem mobilen Teilnehmer in Verbindung stehenden funktechnischen Einrichtung ermittelt und es wird ein Heimtarif vergebührt, falls sich die Lokationsinformation auf einen Heimatbereich des Teilnehmers bezieht.

Es ist ein Nachteil dieser Verfahren, dass solche Zonen oder Lokationsinformationen für viele Anwendungen zuwenig genau festgelegt werden können, respektive dass der aktuelle Standort eines Benutzers ungenügend genau festgestellt werden kann. Es ist auch ein Nachteil dieser Verfahren, dass die technische Realisierung aufwändig ist.

In der Patentanmeldung US 2003/0054836 wird ein Verfahren zur Zeiterfassung einer sich in Bewegung befindlichen Person beschrieben. Mittels eines Lesegeräts werden Daten von einem Transponder ausgelesen und an ein mobiles Telefon übertragen. Mittels des mobilen Telefons werden die Daten an ein Kontrollsystem übermittelt, wobei im Kontrollsystem eine Zeitinformation abgespeichert wird.

In der internationalen Anmeldung WO 98/58509 wird eine Chipkarte für GSM-Zellulartelefone beschrieben. Die Chipkarte umfasst Speichermittel zur Abspeicherung von Identifikationsdaten eines Abonnenten sowie elektrische Kontakte zur Verbindung der Chipkarte mit einer mobilen Kommunikationsstation. Die Chipkarte enthält mindestens eine Spule, welche den Aufbau einer Kommunikation zwischen der Chipkarte und einer ausserhalb der Kommunikationsstation befindlichen externen Vorrichtung ermöglicht.

In der internationalen Anmeldung WO 2004/054304 wird ein Verfahren zur anonymen Überwachung der Position eines tragbaren Geräts in einer drahtlosen Infrastruktur beschrieben. Mittels drahtloser Stationen wird beispielsweise über das ZigBee Protokoll ein eindeutiger Identifikator eines Geräts erfasst. Der Identifikator wird über einen Backbone der drahtlosen Infrastruktur zusammen mit einer Zeitinformation in einer Datenbank abgespeichert, sodass die letzte Interaktion des Geräts mit einer Station nachgeschlagen werden kann.

### Darstellung der Erfindung

Es ist eine Aufgabe der vorliegenden Erfindung, ein neues Verfahren und ein neues System zur lokationsabhängigen Vergebührung einer Dienstleistung, welche von einem Benutzer mit einem mobilen Terminal, welches ein Identifikationsmodul umfasst, beansprucht wird, vorzuschlagen, welches Verfahren und welches System nicht die Nachteile des Standes der Technik aufweisen.

Die Erfindung wird in den angehängten unabhängigen Ansprüchen definiert. Weitere vorteilhafte Ausführungsformen gehen ausserdem aus den abhängigen Ansprüchen und der Beschreibung hervor.

Insbesondere werden diese Ziele durch die Erfindung dadurch erreicht, dass das Identifikationsmodul zu bestimmbaren Zeitpunkten einen Request zur Übermittlung von Daten eines Lokationstags ausstrahlt, wobei der Request eine Identifikation umfasst; dass der Request durch mindestens einen Lokationstag empfangen und die im Request enthaltene Identifikation durch den mindestens einen Lokationstag ausgewertet wird,
dass über eine drahtlose Schnittstelle des Identifikationsmoduls des mobilen Terminals eine lokale Kommunikationsverbindung zu dem mindestens einen, den Request empfangenden, externen Lokationstag mit einer entsprechenden drahtlosen Schnittstelle aufgebaut wird, wobei der mindestens eine Lokationstag erst nach Auswertung der besagten Identifikation die besagten Daten an das Identifikationsmodul überträgt; dass durch eine Auswertung der übertragenen Daten des mindestens einen externen Lokationstags eine Standortidentifikation ermittelt wird, und dass in einer Vergebührungseinheit zur Vergebührung von Dienstleistungen ein der ermittelten Standortidentifikation zugeordneter Vergebührungstarif selektiert wird. Dubei kann der Vergebührungstarif gemäss irgendeinem Verfahren bestimmt werden oder der Vergebührungstarif kann aus einer definierten Menge selektiert werden, und zwar unter besonderen Sicherungsmassnahmen. Ein solches Verfahren hat insbesondere den Vorteil, dass der zur Anwendung gebrachte Vergebührungstarif sehr genau dem aktuellen Standort des mobilen Terminals angepasst werden kann, wobei die Aussetzung zu Hacker-Angriffen so niedrig wie möglich gehalten wird. Dabei kann sich die Standortidentifikation auf eine Zone, wie beispielsweise eine private Wohnung, ein Abteil in einem Zug, ein Büro in einem Bürogebäude, ein Restaurant, ein Werbeplakat oder einen Hotspot eines drahtlosen Netzwerks beziehen. Die Standortidentifikation kann sich aber auch auf geographische Koordinaten oder auf eine geographische Distanz zu Telekommunikationseinrichtungen von Dritten beziehen.

In einer Ausführungsvariante wird die lokale Kommunikationsverbindung über eine Schnittstelle gemäss dem ZigBee Standard, gemäss dem Bluetooth Standard oder gemäss einem NFC Standard (NFC: Near Field Communication) aufgebaut. Eine solche lokale Kommunikationsverbindung kann derart aufgebaut werden, dass insbesondere kein Mobilfunknetzwerk beansprucht wird. Ein solches Verfahren hat insbesondere den Vorteil, dass bewährte Technologien für den Aufbau der lokalen Kommunikationsverbindungen verwendet werden können.

In einer anderen Ausführungsvariante werden mittels dem Identifikationsmodul Daten vom Lokationstag auf eine Zentraleinheit eines mobilen Kommunikationsnetzwerks, in welchem das mobile Terminal eingebucht ist, übertragen, wobei die Daten des Lokationstags durch die Zentraleinheit ausgewertet werden, und entsprechend dieser Auswertung ein Vergebührungstarif in der Vergebührungseinheit des mobilen Kommunikationsnetzwerks selektiert wird. Der Vergebührungstarif kann dabei aus einer definierbaren Menge von Vergebührungstarifen, beispielsweise aus einer Tabelle mit Vergebührungstarifen, bestimmt oder selektiert werden. Eine solche Ausführungsvariante hat insbesondere den Vorteil, dass Daten des Lokationstags über für den Betreiber des mobilen Kommunikationsnetzwerks vertrauenswürdige Mittel an eine Zentraleinheit übertragen werden können und von dieser Zentraleinheit mit für den Betreiber des mobilen Kommunikationsnetzwerks vertrauenswürdigen Mittel ausgewertet werden können.

In einer weiteren Ausführungsvariante werden die Daten des Lokationstags durch die Zentraleinheit mittels eines in der Zentraleinheit abgespeicherten elektronischen Schlüssels entschlüsselt. Ein solches Verfahren hat insbesondere den Vorteil, dass Daten auf dem Lokationstag verschlüsselt abgespeichert werden, sodass beispielsweise nur mit einem elektronischen Schlüssel des Netzbetreibers des mobilen Kommunikationsnetzwerks auf die Daten des Lokationstags zugegriffen werden kann und somit diese Daten für Dritte nicht einsehbar oder fälschbar sind.

In einer anderen Ausführungsvariante wird die lokale Kommunikationsverbindung zu einem durch Sicherheitsmittel gesicherten Lokationstag aufgebaut. Die Sicherheitsmittel können sich beispielsweise auf mechanische Mittel zur gesicherten Anbringung des Lokationstags an definierbaren Stellen in einem Raum, wie beispielsweise an einem Personal Computer oder an einer Stromsteckdose, beziehen. Ein solches Verfahren hat insbesondere den Vorteil, dass für den Netzbetreiber des mobilen Kommunikationsnetzwerks sichergestellt ist, dass ein Lokationstag nicht durch Unberechtigte entfernt werden kann oder dass der Standort des Lokationstags nicht durch Unberechtigte verändert werden kann.

In einer Ausführungsvariante wird der Lokationstag mit einem Kommunikationskanal verbunden. Der Kommunikationskanal kann sich beispielsweise auf ein Kommunikationskanal eines Festnetztelefonnetzwerks, auf einen PLC (PLC: Power Line Communications) basierten Kommunikationskanal, auf einen Kommunikationskanal eines Fernsehkabelnetzwerks oder auf irgendeinen anderen Kommunikationskanal beziehen. Der Lokationstag kann somit mit einem Kommunikationskanal gepaart werden, wobei dadurch beispielsweise über den Kommunikationskanal überprüft werden kann, dass der Lokationstag korrekt platziert ist oder wobei über den Kommunikationskanal Daten auf den Lokationstag geladen werden können. Ein solches Verfahren hat insbesondere den Vorteil, dass sichergestellt werden kann, dass ein Lokationstag nicht durch Unberechtigte manipuliert oder entfernt werden kann.

In einer weiteren Ausführungsvariante wird durch die Zentraleinheit ermittelt, über welche Basisstation das mobile Terminal in das mobile Kommunikationsnetzwerk eingebucht ist, wobei Daten der ermittelten Basisstation mit Daten des Lokationstags verglichen werden. Ein solches Verfahren hat insbesondere den Vorteil, dass der Betreiber des mobilen Kommunikationsnetzwerks mittels bestehender Mittel eine zusätzliche Überprüfung der aktuellen Lokation eines mobilen Terminals durchführen kann und so die Plausibilität der durch Daten des Lokationstags ermittelten Lokation ermitteln kann.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figur illustriert:

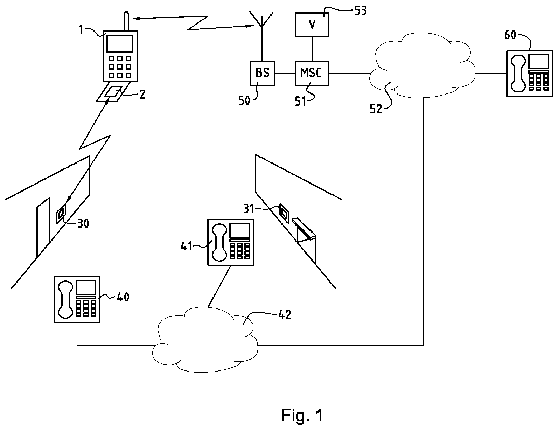

Figur 1 zeigt ein Blockdiagramm mit den einzelnen Bestandteilen eines erfindungsgemässen Verfahrens und Systems für die lokationsabhängige Vergebührung von Dienstleistungen welche durch einen Benutzer mit einem mobilen Terminal mit einem Identifikationsmodul beansprucht werden.

### Weg(e) zur Ausführung der Erfindung

In Figur 1 bezieht sich das Bezugszeichen 1 auf ein mobiles Terminal und das Bezugszeichen 50 bezieht sich auf eine Basisstation eines mobilen Kommunikationsnetzwerks. Das mobile Terminal kann ein mobiles Telefon, ein PDA (PDA: Personal Digital Assistant), ein tragbarer Computer wie ein Laptop, eine Spielstation oder irgendein anderes mobiles Terminal sein. Das mobile Kommunikationsnetzwerk kann gemäss irgendeinem Standard aufgebaut sein. So kann sich das mobile Kommunikationsnetzwerk beispielsweise auf ein GSM (GSM: Global System for Mobile Communications) Netzwerk, ein UMTS (UMTS: Universal Mobile Telecommunications System) Netzwerk oder ein WLAN (WLAN: Wireless Local Area Network) Netzwerk beziehen. Das mobile Terminal 1 bezieht sich auf ein dem mobilen Kommunikationsnetzwerk entsprechendes Gerät, also beispielsweise auf ein mobiles Terminal, welches gemäss dem GSM Standard, gemäss dem UMTS Standard oder gemäss dem WLAN Standard beispielsweise über eine Luftschnittstelle mit dem mobilen Kommunikationsnetzwerk verbindbar ist. Das mobile Terminal 1 umfasst ein Identifikationsmodul 2. Das Identifikationsmodul 2 kann beispielsweise als eine dem Fachmann bekannte Identifikationskarte wie einer SIM-Karte (SIM: Subscriber Identity Module) oder gemäss irgendeinem anderen Standard ausgeführt sein. Das Identifikationsmodul 2 kann vom mobilen Terminal 1 getrennt und weggenommen werden. Das Identifikationsmodul 2 kann aber auch direkt im mobilen Terminal 1 eingebaut sein, sodass das Identifikationsmodul mit dem mobilen Terminal fest verbunden ist und nicht entfernt werden kann. Mittels auf dem Identifikationsmodul 2 abgespeicherten Daten wird das mobile Terminal über die Basisstation 50 in das mobile Kommunikationsnetz eingebucht, wobei nach der Einbuchung beispielsweise Telekommunikationsverbindungen von oder nach dem mobilen Terminal erstellbar sind. In Figur 1 ist neben der Basisstation 50 auch ein MSC (MSC: Mobile Switching Center) des mobilen Kommunikationsnetzwerks eingezeichnet. Dem Fachmann ist aber klar, dass ein mobiles Kommunikationsnetzwerk noch viele zusätzliche Vorrichtungen, wie beispielsweise ein HLR (HLR: Home Location Register), ein VLR (VLR: Visiting Location Register) oder ein AUC (AUC: Authentication Center), oder irgendwelche andere Register oder Vorrichtungen, umfasst. In Figur 1 bezieht sich das Bezugszeichen 52 auf ein Telekommunikationsnetzwerk eines ersten Anbieters. Das Telekommunikationsnetzwerk 52 kann Netzwerke unterschiedlicher Technologien umfassen. So kann das Telekommunikationsnetzwerk 52 insbesondere ein mobiles Kommunikationsnetzwerk und ein Festnetzwerk umfassen. Selbstverständlich umfasst das mobile Kommunikationsnetzwerk auch eine Vergebührungseinheit 53 zur Vergebührung von Telekommunikationsverbindungen des mobilen Terminals 1. In Figur 1 ist die Vergebührungseinheit 53 mit dem MSC verbunden. Es spielt jedoch keine Rolle, wie die Vergebührungseinheit 53 mit den Netzwerkvorrichtungen des mobilen Kommunikationsnetzwerks verbunden ist. So kann die Vergebührungseinheit beispielsweise auch mit einem HLR oder einem AUC des mobilen Kommunikationsnetzwerks verbunden sein, oder die Vergebührungseinheit 53 kann auch ausserhalb des mobilen Kommunikationsnetzwerks angeordnet sein. Mittels der Vergebührungseinheit 53 können Telekommunikationsverbindungen entsprechend verschiedener Parameter, wie beispielsweise der Dauer einer Telekommunikationsverbindung oder dem Abgangsort respektive dem Zielort einer Telekommunikationsverbindung, vergebührt werden. Dazu umfasst die Vergebührungseinheit 53 beispielsweise Mittel, um einem erfassten Parameter einer Telekommunikationsverbindung basierend auf einem Vergebührungstarif einen Geldbetrag zuzuordnen und diesen Geldbetrag einem Konto eines Teilnehmers zu belasten. Parameter von Telekommunikationsverbindungen können durch irgendeine Vorrichtung, wie beispielsweise einem MSC (MSC: Mobile Switching Center), erfasst werden und an die Vergebührungseinheit 53 übermittelt werden. Der Vergebührungstarif kann beispielsweise in Tabellen der Vergebührungseinheit 53 abgespeichert sein, wobei mittels solcher Tabellen beispielsweise einer Dauer einer Telekommunikationsverbindung ein Geldbetrag zugeordnet wird.

Neben Telekommunikationsverbindungen des mobilen Terminals 1 können durch den Benutzer weitere Dienstleistungen beansprucht werden. So kann ein Benutzer einen SMS Dienst (SMS: Short Message Service) beanspruchen, mit welchem SMS Dienst dem Benutzer die neusten Wetternachrichten oder Börsennachrichten auf das mobile Terminal 1 übertragen werden. Oder der Benutzer kann einen Fernsehdienst beanspruchen, wobei dem Benutzer beispielsweise die Fernsehnachrichten auf das mobile Terminal 1 übertragen werden. Oder der Benutzer kann mit dem mobilen Terminal 1 über ein Web-Portal Einkäufe wie Bücherbestellungen oder Lebensmittelbestellungen tätigen. Oder der Benutzer kann mit der Kreditkarte in einem Geschäft für die Beanspruchung einer Dienstleistung bezahlen. Solche Dienstleistungen werden über entsprechende Vergebührungsvorrichtungen dem Benutzer belastet. So kann sich eine Vergebührungsvorrichtung auf ein Softwaremodul zur Vergebührung von SMS Meldungen, der Übertragung von MMS Meldungen (MMS: Multimedia Message Service), der Übertragung von Fernsehclips oder Fernsehnachrichten, der Auslieferung von Büchern oder Lebensmitteln, der Vergebührung eines Betrags auf einem Kreditkartenkonto oder auf die Vergebührung von irgendwelchen anderen Dienstleistungen beziehen.

In Figur 1 beziehen sich die Bezugszeichen 30, 31 auf Lokationstags. Wie in Figur 1 schematisch gezeichnet, kann der Lokationstag 30 beispielsweise an der Wand neben der Eingangstüre eines geschäftlich genutzten Büros angebracht sein. Der Lokationstag 31 kann beispielsweise neben dem Kamin einer privat genutzten Wohnung angebracht sein. Die Lokationstags 30, 31 können jedoch irgendwo angebracht sein. Auf den Lokationstags 30, 31 können Daten abgespeichert sein, welche Daten über drahtlose Schnittstellen des Identifikationsmoduls 2 sowie drahtlose Schnittstellen der Lokationstags 30, 31 übermittelbar sind. Die Übermittlung der Daten kann beispielsweise nach dem ZigBee Standard oder nach dem Bluetooth Standard erfolgen. Die auf den Lokationstags abgespeicherten Daten können beispielsweise einen Tarifcode, einen verschlüsselten Tarifcode oder die geographischen Koordinaten eines Standorts umfassen.

In Figur 1 beziehen sich die Bezugszeichen 40, 41 auf Endgeräte eines Telekommunikationsnetzwerks 42 eines zweiten Anbieters. Das Telekommunikationsnetzwerk 42 kann gemäss irgendeiner Technologie aufgebaut sein, so z.B. gemäss einem Standard für mobile Telekommunikationsnetzwerke oder gemäss einem Standard für Festnetzwerke. In Figur 1 bezieht sich das Telekommunikationsnetzwerk 42 beispielsweise auf ein Festnetzwerk mit fest installierten Endgeräten 40, 41. Das Endgerät 40 kann beispielsweise im erwähnten geschäftlich genutzten Büro angebracht sein. Das Endgerät 41 kann beispielsweise in der erwähnten privat genutzten Wohnung angebracht sein. Selbstverständlich können das Endgerät 40 und das Endgerät 41 über getrennte Telekommunikationsnetzwerke von verschiedenen Betreibern angeschlossen sein. Verbindungen welche mit dem Endgerät 40 oder dem Endgerät 41 erstellt werden, werden durch eine Vergebührungseinheit des Telekommunikationsnetzwerks entsprechend einem Vergebührungstarif vergebührt. Dabei kann für ein Endgerät 40, welches in einem geschäftlich genutzten Büro angebracht ist, ein anderer Vergebührungstarif, beispielsweise ein teuerer Vergebührungstarif, zur Anwendung kommen als bei einem Endgerät 41, welches in einer privat genutzten Wohnung angebracht ist. Selbstverständlich können solche unterschiedliche Vergebührungstarife gegenüber dem Kunden beispielsweise durch entsprechende Unterschiede bei der Dienstqualität gerechtfertigt werden.

Wie in Figur 1 gezeichnet, sind das Telekommunikationsnetzwerk 52 und das Telekommunikationsnetzwerk 42 miteinander verbunden, sodass sowohl zwischen dem mobilen Terminal 1 und dem Endgerät 60 als auch zwischen den Endgeräten 40, 41 und dem Endgerät 60 Telekommunikationsverbindungen erstellt werden können. Zur Verbindung der Telekommunikationsnetzwerke 52, 42 werden entsprechende Gateway-Vorrichtungen verwendet.

Das Identifikationsmodul 2 kann nun so eingerichtet sein, dass zu bestimmbaren Zeitpunkten überprüft wird, ob über die drahtlose Schnittstelle des Identifikationsmoduls 2 eine lokale Kommunikationsverbindung zu einem Lokationstag erstellt werden kann. So kann durch das Identifikationsmodul 2 zu bestimmbaren Zeitpunkten beispielsweise ein Request zur Übermittlung von Daten eines Lokationstags ausgestrahlt werden. Ein solcher Request kann beispielsweise auf einem ZigBee Standard oder einem Bluetooth Standard basieren und kann beispielsweise eine Identifikation oder eine verschlüsselte Identifikation umfassen. Eine solche Identifikation oder verschlüsselte Identifikation kann von entsprechend eingerichteten Lokationstags ausgewertet werden. Allerdings kann eine solche Identifikation oder verschlüsselte Identifikation von anderen Geräten trotz einer entsprechenden drahtlosen Schnittstelle nicht sinnvoll ausgewertet werden. Nachdem die Identifikation durch den Lokationstag ausgewertet ist, werden beispielsweise Daten vom Lokationstag an das Identifikationsmodul 2 übermittelt. Eine solche Übermittlung kann durch den Lokationstag ausgelöst werden oder durch die Übermittlung eines weiteren Requests von des Identifikationsmoduls 2 an den Lokationstag. Die vom Lokationstag auf das Identifikationsmodul 2 übermittelten Daten können beispielsweise einen Tarifcode, einen verschlüsselten Tarifcode oder geographische Koordinaten umfassen.

Das mobile Terminal 1 wird über die Basisstation 50 in das mobile Kommunikationsnetz eingebucht. Zur Einbuchung des mobilen Terminals 1 werden verschiedene allgemein bekannte Verfahren verwendet. So wird nach solchen Verfahren insbesondere eine Authentisierung durchgeführt. Der Betreiber des mobilen Kommunikationsnetzwerks kann danach insbesondere das mobile Terminal einem autorisierten Teilnehmer zuordnen. Zudem kann eine gesicherte Kommunikationsverbindung zwischen dem Identifikationsmodul 2 und irgendeiner Vorrichtung des mobilen Kommunikationsnetzwerks erstellt werden.

Somit können die Daten des Lokationstags über eine gesicherte Verbindung vom Identifikationsmodul 2 auf irgendeine Vorrichtung des mobilen Telekommunikationsnetzwerks übertragen werden, so zum Beispiel auf die Vergebührungseinheit 53. Wie erwähnt können beispielsweise die Daten des Lokationstags 30 einen verschlüsselten Tarifcode umfassen. Auf der Vergebührungseinheit 53 kann der entsprechende elektronische Schlüssel zur Entschlüsselung des verschlüsselten Tarifcodes abgespeichert sein. Nach der Entschlüsselung des verschlüsselten Tarifcodes kann auf der Vergebührungseinheit ein dem Tarifcode zugeordneter Vergebührungstarif bestimmt werden oder aus einer definierbaren Menge, beispielsweise einer Tabelle, selektiert werden. Selbstverständlich kann der Vergebührungstarif so gewählt werden, dass ein in der Nähe des Lokationstags installiertes Telefongerät eines zweiten Betreibers eines Telekommunikationsnetzwerks konkurrenziert werden kann. Der Vergebührungstarif kann aber auch gemäss irgendeinem Algorithmus bestimmt werden. So können sich die Daten des Lokationstags 30 auf geographische Koordinaten beziehen, wobei mittels eines Algorithmus eine Wahrscheinlichkeit bestimmt wird, mit welcher ein Konkurrent an diesem Standort Telekommunikationsdienstleistungen anbietet, wobei der Vergebührungstarif entsprechend dieser Wahrscheinlichkeit bestimmt wird oder für die Vergebührung selektiert wird.

Erfindungsgemäss können Dienstleistungen, welche von einem Benutzer beansprucht werden gemäss einem Vergebührungstarif vergebührt werden, welcher entsprechend dem aktuellen Standort des Benutzers selektiert wird. So kann beispielsweise ein Lokationstag an einem Werbeplakat angebracht sein, wobei auf dem Werbeplakat eine Zugangsadresse für die Bestellung des auf dem Werbeplakat beworbenen Produkts oder der beworbenen Dienstleistung aufgedruckt ist. Bei einer Bestellung des Produkts mittels der Zugangsadresse kann dem Benutzer mittels einer Vergebührungsvorrichtung ein Geldbetrag vergebührt werden, wobei der Benutzer beispielsweise von einem besonders günstigen Vergebührungstarif profitiert, weil er sich am Standort des Werbeplakats befindet. Es kann aber auch ein Lokationstag an einer Bushaltestelle angebracht sein. Um die Wartezeit an der Bushaltestelle zu nutzen, kann der Benutzer beispielsweise von einem Dienstanbieter das Übertragen der neuesten Fernsehnachrichten anfordern. Je nach Preispolitik des Dienstanbieters kann nun eine solche Übertragung entsprechend einem selektierbaren Vergebührungstarif erfolgen, wobei für die Selektion des Vergebührungstarifs die auf dem Lokationstag abgespeicherten Daten berücksichtigt werden.

Die Lokationstags 30,31 können mittels Sicherheitsmittel gesichert sein. Solche Sicherheitsmittel können sich auf mechanische Mittel wie ein abschliessbares Schloss beziehen. Diese Sicherheitsmittel können sich aber auch auf elektronische Mittel beziehen. So kann ein Lokationstag beispielsweise als USB (USB: Universal Serial Bus) Stick ausgeführt sein, wobei bei der Anbringung des USB Stick eine Identifikation des Computers überprüft wird, und wobei die beschriebenen Funktionen des Lokationstags nur bei einer erfolgreichen Überprüfung dieser Identifikation freigeschaltet werden.

Die drahtlose Schnittstelle des Identifikationsmoduls 2 kann gemäss unterschiedlichen Ausführungsvarianten ausgestaltet sein. So kann das Identifikationsmodul 2 beispielsweise als übliche SIM-Karte ausgeführt sein, wobei alle Komponenten der drahtlosen Schnittstelle wie Encoder, Modulator, Decoder, Antenne, Treiber, etc., also alle Komponenten welche notwendig sind, um die drahtlose Schnittstelle gemäss beispielsweise einem ZigBee Standard zu betreiben, an der SIM-Karte angebracht sind. Je nach Anwendung können die SIM-Karte und die drahtlose Schnittstelle aber auch so ausgestaltet sein, dass Teile der drahtlosen Schnittstelle, wie beispielsweise die Antenne, am Gehäuse des mobilen Terminals angebracht sind. Selbstverständlich sind dem Fachmann weitere Ausführungsvarianten bekannt, um ein erfindungsgemässes Identifikationsmodul 2 an einem mobilen Terminal anzubringen und um eine drahtlose Schnittstelle am Identifikationsmodul 2 anzubringen.

## Patentansprüche

1. Verfahren zur lokationsabhängigen Vergebührung einer Dienstleistung, die von einem Benutzer mit einem mobilen Terminal (1), welches ein Identifikationsmodul (2) umfasst, beansprucht wird, **dadurch gekennzeichnet, dass** das Identifikationsmodul zu bestimmbaren Zeitpunkten einen Request zur Übermittlung von Daten eines Lokationstags ausstrahlt, wobei der Request eine Identifikation umfasst;
dass der Request von mindestens einem Lokationstag empfangen wird und die im Request enthaltene Identifikation durch den mindestens einen Lokationstag ausgewertet wird,
dass über eine drahtlose Schnittstelle des Identifikationsmoduls (2) eine lokale Kommunikationsverbindung zu dem mindestens einen externen Lokationstag (30,31) mit einer entsprechenden drahtlosen Schnittstelle aufgebaut wird, wobei der mindestens eine Lokationstag erst nach Auswertung der besagten Identifikation die besagten Daten an das Identifikationsmodul überträgt; dass durch eine Auswertung der übertragenen Daten des mindestens einen externen Lokationstags (30,31) eine Standortidentifikation ermittelt wird, und
dass in einer Vergebührungseinheit (53) zur Vergebührung der durch den Benutzer beanspruchten Dienstleistung ein der ermittelten Standortidentifikation zugeordneter Vergebührungstarif selektiert wird.

2. Verfahren nach Anspruch 1, **dadurch gekennzeichnet, dass** die lokale Kommunikationsverbindung über eine Schnittstelle gemäss dem ZigBee Standard, gemäss dem Bluetooth Standard oder gemäss einem NFC Standard aufgebaut wird.

3. Verfahren nach einem der Ansprüche 1 bis 2, **dadurch gekennzeichnet, dass** mittels des Identifikationsmoduls (2) Daten vom Lokationstag auf eine Zentraleinheit eines mobilen Kommunikationsnetzwerks, in welchem das mobile Terminal (1) eingebucht ist, übertragen werden, wobei die Daten des Lokationstags durch die Zentraleinheit ausgewertet werden, und entsprechend dieser Auswertung ein Vergebührungstarif in der Vergebührungseinheit (53) des mobilen Kommunikationsnetzwerks selektiert wird.

4. Verfahren nach einem der Ansprüche 1 bis 3, **dadurch gekennzeichnet, dass** die Daten des Lokationstags (30,31) durch die Zentraleinheit mittels eines in der Zentraleinheit abgespeicherten elektronischen Schlüssels entschlüsselt werden.

5. Verfahren nach einem der Ansprüche 1 bis 4, **dadurch gekennzeichnet, dass** die lokale Kommunikationsverbindung zu einem durch Sicherheitsmittel gesicherten Lokationstag (30,31) aufgebaut wird.

6. Verfahren nach einem der Ansprüche 1 bis 5, **dadurch gekennzeichnet, dass** der Lokationstag mit einem Kommunikationskanal verbunden wird.

7. Verfahren nach einem der Ansprüche 1 bis 6, **dadurch gekennzeichnet, dass** durch die Zentraleinheit ermittelt wird, über welche Basisstation (50) das mobile Terminal (1) in das mobile Kommunikationsnetzwerk eingebucht ist, wobei Daten der ermittelten Basisstation (50) mit Daten des Lokationstags (30,31) verglichen werden.

8. System zur lokationsabhängigen Vergebührung einer Dienstleistung, welche von einem Benutzer mit einem mobilen Terminal (1), welches ein Identifikationsmodul (2) umfasst, beansprucht wird, wobei das Identifikationsmodul (2) eine drahtlose Schnittstelle zur Erstellung einer lokalen Kommunikationsverbindung zu mindestens einem externen Lokationstag (30,31) mit einer entsprechenden drahtlosen Schnittstelle umfasst,
und wobei auf dem mindestens einen externen Lokationstag (30,31) Daten zur Ermittlung einer Standortidentifikation abgespeichert sind;
wobei das System ferner eine Vergebührungseinheit aufweist, die eingerichtet ist, die durch den Benutzer beanspruchte Dienstleistung entsprechend einem der ermittelten Standortidentifikation zugeordneten Vergebührungstarif zu vergebühren, **dadurch gekennzeichnet, dass** das Identifikationsmodul eingerichtet ist, zu bestimmbaren Zeitpunkten einen Request zur Übermittlung der Daten eines Lokationstags auszustrahlen, wobei der Request eine Identifikation umfasst; und wobei ein den Request empfangender Lokationstag dazu eingerichtet ist, die im Request enthaltene Identifikation auszuwerten und
erst nach Auswertung der besagten Identifikation besagte Daten an das Identifikationsmodul zu übertragen.

9. System nach Anspruch 8, **dadurch gekennzeichnet, dass** die drahtlose Schnittstelle des Identifikationsmoduls (2) gemäss dem ZigBee Standard, gemäss dem Bluetooth Standard oder gemäss einem NFC Standard ausgeführt ist.

10. System nach einem der Ansprüche 8 bis 9, **dadurch gekennzeichnet, dass** das Identifikationsmodul (2) eingerichtet ist um Daten vom Lokationstag auf eine Zentraleinheit eines mobilen Kommunikationsnetzwerks, in welchem das mobile Terminal (1) eingebucht ist, zu übertragen, wobei die Daten des Lokationstags durch die Zentraleinheit auswertbar sind, und wobei entsprechend dieser Auswertung ein Vergebührungstarif in der Vergebührungseinheit (53) des mobilen Kommunikationsnetzwerks selektierbar ist.

11. System nach einem der Ansprüche 8 bis 10, **dadurch gekennzeichnet, dass** die Zentraleinheit eingerichtet ist um die Daten des Lokationstags (30,31) durch einen in der Zentraleinheit abgespeicherten elektronischen Schlüssel zu entschlüsseln.

12. System nach einem der Ansprüche 8 bis 11, **dadurch gekennzeichnet, dass** der Lokationstag (30,31) Sicherheitsmittel zur Sicherung des Lokationstags (30,31) umfasst.

13. System nach einem der Ansprüche 8 bis 12, **dadurch gekennzeichnet, dass** der Lokationstag mit einem Kommunikationskanal verbindbar ist.

14. System nach einem der Ansprüche 8 bis 13, **dadurch gekennzeichnet, dass** mittels der Zentraleinheit ermittelbar ist, über welche Basisstation (50) das mobile Terminal (1) in das mobile Kommunikationsnetzwerk eingebucht ist, wobei Daten der ermittelten Basisstation (50) mit Daten des Lokationstags (30,31) vergleichbar sind.

## Claims

1. Method for location-dependent billing for a service availed of by a user with a mobile terminal (1) comprising an identification module (2), **characterized in that** the identification module at definable points in time transmits a request for transmission of data of a location tag, the request comprising an identification; **in that** the request is received by at least one location tag and the identification contained in the request is evaluated by the at least one location tag; **in that**, via a wireless interface of the identification module (2), a local communication connection to the at least one external location tag (30, 31) is set up with a corresponding wireless interface, whereby only after evaluation of the said identification the at least one location tag transmits the said data to the identification module; **in that** through an evaluation of the transmitted data of the at least one external location tag (30, 31), a location identification is ascertained, and **in that** in a billing unit (53) a billing rate assigned to the ascertained location identification is selected for billing for the service availed of by the user.

2. Method according to claim 1, **characterized in that** the local communication connection is set up via an interface based on the ZigBee standard, based on the Bluetooth standard or based on a NFC standard.

3. Method according to one of the claims 1 to 2, **characterized in that**, by means of the identification module (2), data of the location tag are transmitted to a central unit of a mobile communication network, in which the mobile terminal (1) is logged, the data of the location tag being evaluated by the central unit, and in accordance with this evaluation a billing rate being selected in the billing unit (53) of the mobile communication network.

4. Method according to one of the claims 1 to 3, **characterized in that** the data of the location tag (30, 31) are decrypted by the central unit by means of an electronic key stored in the central unit.

5. Method according to one of the claims 1 to 4, **characterized in that** the local communication connection is set up to a location tag (30, 31) secured through security means.

6. Method according to one of the claims 1 to 5, **characterized in that** the location tag is connected to a communication channel.

7. Method according to one of the claims 1 to 6, **characterized in that** it is ascertained by the central unit via which base station (50) the mobile terminal (1) is logged into the mobile communication network, data of the determined base station (50) being compared with data of the location tag (30, 31).

8. System for location-dependent billing for a service availed of by a user with a mobile terminal (1) comprising an identification module (2), whereby the identification module (2) comprises a wireless interface for setting up a local communication connection to at least one external location tag (30, 31) with a corresponding wireless interface, and whereby on the at least one external location tag (30, 31) data are stored for determining a location identification, whereby the system further comprises a billing unit which is set up to bill for the service availed of by the user according to a billing rate assigned to the ascertained location identification, **characterized in that** the identification module is set up to transmit at definable points in time a request for transmission of the data of a location tag, the request comprising an identification; and whereby a location tag receiving the request is set up to evaluate the identification contained in the request and to transmit said data to the identification module only after evaluation of the said identification.

9. System according to claim 8, **characterized in that** the wireless interface of the identification module (2) is implemented according to the ZigBee standard, according to the Bluetooth standard or according to a NFC standard.

10. System according to one of the claims 8 to 9, **characterized in that** the identification module (2) is set up to transmit data of the location tag to a central unit of a mobile communication network, in which the mobile terminal (1) is logged, the data of the location tags being able to be evaluated by the central unit, and in accordance with this evaluation a billing rate being able to be selected in the billing unit (53) of the mobile communication network.

11. System according to one of the claims 8 to 10, **characterized in that** the central unit is set up to decrypt the data of the location tag (30, 31) by means of an electronic key stored in the central unit.

12. System according to one of the claims 8 to 11, **characterized in that** the location tag (30, 31) comprises security means for securing the location tag (30, 31).

13. System according to one of the claims 8 to 12, **characterized in that** the location tag is connectible to a communication channel.

14. System according to one of the claims 8 to 13, **characterized in that** ascertainable by means of the central unit is via which base station (50) the mobile terminal (1) is logged into the mobile communication network, data of the determined base station (50) being able to be compared with data of the location tag (30, 31).

## Revendications

1. Procédé pour la tarification d'un service demandé par un utilisateur en fonction de la localisation, l'utilisateur étant pourvu d'un terminal mobile (1) comprenant un module d'identification (2), **caractérisé en ce que** le module d'identification émet, à des instants prédéterminés, une requête pour la transmission de données d'une balise de localisation, la requête comprenant une identification; **en ce que** la requête est reçue par au moins une balise de localisation et l'identification contenue dans la requête est évaluée par ladite au moins une balise de localisation; **en ce que**, via une interface sans fil du module d'identification (2), une connexion de communication locale vers la au moins une balise de localisation externe (30, 31) est configurée avec une interface sans fil correspondante, ladite au moins une balise de localisation ne transmettant lesdites données au module d'identification seulement qu'après l'évaluation de ladite identification; **en ce que** une identification de localisation est déterminée via une évaluation des données transmises de ladite au moins une balise de localisation externe (30, 31), et **en ce que**, dans une unité de facturation (53), un tarif de facturation assigné à l'identification de localisation obtenue est sélectionnée pour facturer le service demandé par l'utilisateur.

2. Procédé selon la revendication 1, **caractérisé en ce que** la connexion de communication locale est configurée via une interface basée sur le standard ZigBee, basée sur le standard Bluetooth ou basée sur un standard NFC.

3. Procédé selon l'une des revendications 1 à 2, **caractérisé en ce que**, au moyen du module d'identification (2), les données de la balise de localisation sont transmises à l'unité centrale d'un réseau de communication mobile, dans lequel le terminal mobile (1) est enregistré, les données de la balise de localisation étant évaluées par l'unité centrale, et conformément à cette évaluation, un tarif de facturation étant sélectionné dans l'unité de facturation (53) du réseau de communication mobile.

4. Procédé selon l'une des revendications 1 à 3, **caractérisé en ce que** les données de la balise de localisation (30, 31) sont déchiffrées par l'unité centrale au moyen d'une clé électronique stockée dans l'unité centrale.

5. Procédé selon l'une des revendications 1 à 4, **caractérisé en ce que** la connexion de communication locale est reliée à une balise de localisation (30, 31) sécurisée par des moyens de sécurité.

6. Procédé selon l'une des revendications 1 à 5, **caractérisé en ce que** la balise de localisation est connectée à un canal de communication.

7. Procédé selon l'une des revendications 1 à 6, **caractérisé en ce que** l'unité centrale détermine via laquelle station de base (50) le terminal mobile (1) est enregistré dans le réseau de communication mobile, des données de la station de base (50) déterminée étant comparées avec des données de la balise de localisation (30, 31).

8. Système pour la tarification d'un service demandé par un utilisateur en fonction de la localisation, lequel utilisateur étant muni d'un terminal mobile (1) comprenant un module d'identification (2), le module d'identification (2) comprenant une interface sans fil pour configurer une connexion de communication locale vers au moins une balise de localisation externe (30, 31) avec une interface sans fil correspondante, et des données étant stockées sur ladite au moins une balise de localisation externe (30, 31) pour déterminer une identification de localisation, le système comprenant par ailleurs une unité de facturation qui est agencée pour facturer le service demandé par l'utilisateur selon un tarif de facturation assigné à l'identification de localisation obtenue, **caractérisé en ce que** le module d'identification est configuré pour émettre, à des instants donnés, une requête pour la transmission des données d'une balise de localisation, la requête comprenant une identification; et une balise de localisation recevant la requête étant configurée pour évaluer l'identification contenue dans la requête et pour transmettre lesdites données au module d'identification seulement après évaluation de ladite identification.

9. Système selon la revendication 8, **caractérisé en ce que** l'interface sans fil du module d'identification (2) est implémenté selon le standard ZigBee, selon le standard Bluetooth ou selon un standard NFC.

10. Système selon l'une des revendications 8 à 9, **caractérisé en ce que** le module d'identification (2) est configuré pour transmettre des données de la balise de localisation à une unité centrale d'un réseau de communication mobile, dans lequel le terminal mobile (1) est enregistré, les données de la balise de localisation pouvant être évaluées par l'unité centrale, et conformément à cette évaluation un tarif de facturation pouvant être sélectionné dans l'unité de facturation (53) du réseau de communication mobile.

11. Système selon l'une des revendications 8 à 10, **caractérisé en ce que** l'unité centrale est configurée pour déchiffrer les données de la balise de localisation (30, 31) au moyen d'une clé électronique stockée dans l'unité centrale.

12. Système selon l'une des revendications 8 à 11, **caractérisé en ce que** la balise de localisation (30,31) comprend des moyens de sécurité pour sécuriser la balise de localisation (30, 31).

13. Système selon l'une des revendications 8 à 12, **caractérisé en ce que** la balise de localisation peut être reliée à un canal de communication.

14. Système selon l'une des revendications 8 à 13, **caractérisé en ce que** l'on peut déterminer, au moyen de l'unité centrale, via quelle station de base (50) le terminal mobile (1) est enregistré dans le réseau de communication mobile, des données de la station de base (50) déterminée pouvant être comparées avec des données de la balise de localisation (30, 31).
